# EUROPEAN PATENT SPECIFICATION

(11) **EP 2 027 384 B1**
(45) Date of publication and mention of the grant of the patent: **15.05.2013**
(21) Application number: 07735348.0
(22) Date of filing: 30.03.2007
(51) Int. Cl.: F02M 21/02

(54) **FUEL INJECTOR**
KRAFTSTOFFEINSPRITZVENTIL
INJECTEUR DE COMBUSTIBLE

(30) Priority: 09.06.2006 IT PR20060053
(43) Date of publication of application: 25.02.2009
(73) Proprietor: A.E.B. S.p.A., 42025 Cavriago (RE) (IT)
(72) Inventor: BARONI, Vincenzo, I-42025 Cavriago (IT)
(74) Representative: Gotra, Stefano
(86) International application number: PCT/IB2007/051159
(87) International publication number: WO 2007/141672

(56) References cited:
- EP-A- 1 114 929
- EP-A- 1 336 747
- WO-A-01/38714
- GB-A- 2 175 452

## Description

### TECHNICAL FIELD AND BACKGROUND ART.

The present invention relates to a fuel injector, comprising, according to WO 01/38714 A and as described in the preamble of claim 1:
- a valve body provided with a chamber able to receive the pressurised fuel;
- a conduit for evacuating the fuel from the injector, having an inlet positioned internally to said chamber;
- a shutter element operatively connected to the valve body, movable between a closed position in which it is active on the inlet of the conduit to occlude a passage of fuel from the chamber to the conduit, and an open position in which it is not active on the inlet of the conduit to allow a passage of fuel from the chamber to the conduit. The present invention is in the sector of systems for supplying fuel, in particular gaseous fuel, for transportation means provided with internal combustion engines, in particular for those systems intended for installation subsequent to the sale of the transportation means.

By way of non limiting example, it is observed that the present invention applies to systems installed on means originally operating with gasoline, alcohol or diesel fuel and subsequently modified to enable their operation also with gas fuel, e.g. methane or LPG.

Due to environmental and economic issues, it is becoming ever more frequent for transportation means operating with gasoline or other liquid fuels to be modified to be able to operate also with gas fuel.

For this purpose, there are workshops which are specialised in the installation of systems able to allow an operation of the vehicle also with gas fuel or, in some cases, only with gas fuel, eliminating the original fuel components.

Gas fuel supply systems, especially new-generation ones, are characterised by the presence of injectors of gaseous fuel.

These injectors, driven by an electronic control unit, serve the purpose of dispensing, by rapidly opening and closing, the proper quantity of fuel.

On the market, there are several types of injectors, belonging to the most widely disparate technical / constructive types.

In this light, it should be noted that the present invention is in the market of gas fuel supply systems for motor vehicles, installed after the sale of the vehicle.

In this market, there is a need to have fuel injection systems that are easily adaptable to all the kinds of available cars, whether their engines be small or large.

Small engine cars require, on average, small injectors, because the quantity of fuel required for the operation of these cars is reduced.

On the contrary, cars with large engines normally need a greater amount of fuel, hence larger size injectors.

To facilitate the task of gas system installers, in view of the multitude of existing engines, one tries in any case to have a common injector type for most vehicles to be converted, hence adaptable to different engine displacements.

In this way, installers can advantageously limit themselves to managing a single type of device / injector, greatly streamlining their inventory and considerably reducing stocking costs.

With regard to injectors studied to be adapted to different types of engines (i.e. displacements), some technical solutions are known.

Usually, said injectors are designed to be able to dispense large quantities / flows of fuel and hence they are suitable for large displacements; if required, to the same injectors are applied appropriate chokers, to reduce the flow of fuel dispensed out of the injectors, when they need to be used for smaller engine displacements.

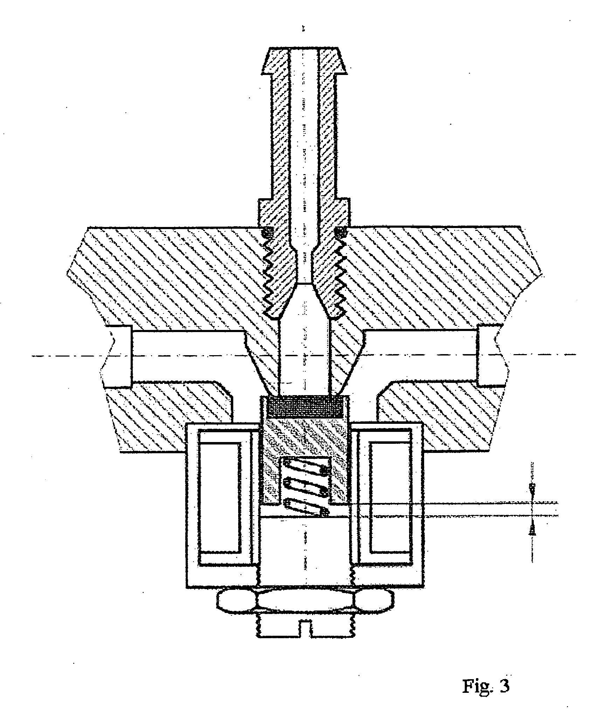

In particular, said injectors comprise a body defining a chamber able to receive the pressurised fuel (as shown in Figure 3).

Moreover, the body defines a hole, i.e. an evacuation conduit, to connect the chamber with said fuel evacuation conduit. To the body is movably associated a piston, which is driven by an electromagnetic circuit to open/close said hole.

The gas is injected into the chamber, the piston, driven by the winding of the coil, opens the hold, whence the gas flows out towards the intake manifolds.

It should be noted that the passage section of the gas from the chamber to the exterior, through the hole, is proportional to the section of the hole itself and to the stroke of the piston. Therefore, in the case of injectors for large engines, said passage section needs to be maximised, increasing / maximising the section of the hole and the stroke of the piston.

Thus, the hole is dimensioned for the greatest flow that can be required by a large engine, and the stroke said piston has to travel to open said hole needs to be dimensioned consequently, i.e. with a large stroke.

In the case of small engines, where said quantity of gas would be exaggerated, a nozzle containing a suitably dimensioned choke is positioned at the output of the injector, to limit the fuel outflow.

In practice, said nozzle is fastened to the body from the exterior relative to the chamber, defining a choke relative to the section of the hole. Therefore, the output conduit of the gas from the chamber has a first portion (at the hole connected with the chamber) with large section (imposed by the need to have a large hole) and a second portion with reduced section, at the choke defined by the nozzle. Once it is fastened to the body, the nozzle defines an extension of the conduit defined by the body itself.

This system enables to exploit only one type of injector for different engine displacements, replacing only the terminal nozzle containing the restriction. However, this solution, which is apparently very convenient, entails some disadvantages and consequently problems, in particular in small engines.

In view of the construction principle, the injector must be designed taking into account the case of maximum fuel flow, thence the rise of the piston that occludes the passage must be calculated to assure the maximum flow of fuel, even when it is not necessary (because the engine displacement is small).

Moreover, the passage hole must also be dimensioned accordingly (for large engine displacements).

This entails the need to use large forces to move the piston, which must overcome considerable pressures and inertia values due to the large dimensions of the hole to be opened subjected to pressure, and to the considerable stroke the piston has to travel.

The response speed of the system is anyway limited by these two factors, which cannot be reduced, because it is necessary to take into account the worst case, i.e. large displacement engines.

This effect is all the more noticeable when moving towards systems with high engine rpm numbers, typically small displacement engines, where part of the low power available is enhanced by increasing the number of rpm.

A second problem encountered with this type of injectors is that when the injector opens, a large hole is opened, even though in small engine systems, a much smaller hole would be sufficient.

This causes in any case the creation of a connecting chamber between the hole and the restriction of the conduit, defined by the choke of the conduit, with variable dimensions according to the construction types, but anyway never completely removable.

This connecting chamber entails, in fact, an additional contribution of gas even when the injector is closed, i.e. when the piston closes the hole, because it has already been filled previously and it has to be emptied. This additional, unwanted inflow of fuel requires a reduction in injection times to compensate for its effect, but, since it is impossible to go below certain times because of the mechanical inertia described above, in the case of small engines this becomes very difficult or even impossible, as the additional (gas) inflow introduced by the presence of the connecting chamber exceeds the requirements of the engine.

As is readily apparent from the above, in theory these injectors should be able to be adapted to a large variety of engines; in fact, however, they operate properly only with large engine systems, whilst they reveal problems in use in combination with smaller engines.

It should be noted that conventional injectors often use a calibration element, which consists of an element that can be screwed in the rear part of the injector, which can partly regulate the stroke of the piston. However, this regulation necessarily entails an action on a spring, which is active on the piston (e.g. to bring it to the closed position), hence partially modifying the load of the spring that causes the piston to close.

Therefore, thanks to this calibration mechanism, the stroke of the piston can be partially regulated, but the regulation is not optimal and it entails disadvantages, because the load of the spring varies, thereby modifying the response parameters of the piston. Additionally, this regulation is subject to drifting over time, because the regulator element does not maintain its fixed position, being stressed by vibrations, impacts and heat stresses that are typical of an engine compartment. Over time, therefore, it is possible that the fine regulation to be executed when installing the system will lose its effectiveness.

Another problem of known injectors is the presence of a rubber gasket associated to the piston, which is subject to wear and to volume variations according to temperature swings; this entailing a considerable difficulty when conducting maintenance (since it is necessary to dismantle the entire injector to replace the gasket) and a limitation of the reliability and precision of the injector, because the variations in the volume of the gasket are reflected on the stroke of the piston. It should be noted that, in conventional injectors, this imposes a constraint on the stroke of the piston which cannot be made very small because it must be much greater than the deformation undergone by the rubber of the gasket in order not to introduce relevant effects on the obstruction of the gas passage.

### DISCLOSURE OF INVENTION.

An object of the present invention is to eliminate the aforesaid problems and to make available a fuel injector designed to operate efficiently and in manner that is optimised with systems having any engine displacement and in particular small engine displacements.

Another object of the present invention is to make available a fuel injector that is particularly reliable and simple to be managed when conducting maintenance.

Said objects are fully achieved by the injector of the present invention, which is characterised by the content of the claims set out below.

### BRIEF DESCRIPTION OF DRAWINGS.

This and other characteristics shall become more readily apparent from the following description of a preferred embodiment, illustrated purely by way of non limiting example in the accompanying drawing tables, in which:
- figure 1 shows a sectioned view of the injector of the present invention;
- figure 2 shows the injector of figure 1 according to an embodiment variant;
- figure 3 shows an injector according to the prior art.

### BEST MODE FOR CARRYING OUT THE INVENTION.

In the figures, the reference number 1 designates an injector according to the present invention.

The injector 1 is a fuel injector, in particular a gaseous fuel injector.

The injector 1 comprises a body provided with a chamber 3 able to receive the pressurised fuel.

The injector 1 also comprises a conduit 4 for evacuating the fuel from the injector 1, subsequently placing it in intake manifolds of the vehicle.

Said conduit 3 has an inlet positioned internally to the chamber 3 and an outlet oriented towards the exterior of the injector.

Moreover, the injector 1 comprises a shutter element 5 operatively connected to the valve body 3 and movable between a closed position, in which it is active on the inlet of the conduit 4 to occlude a passage of fuel from the chamber 3 to the conduit 4, and an open position, in which it is not active on the inlet of the conduit 3, to allow a passage of fuel from the chamber 3 to the conduit 4.

Originally, the injector 1 comprises a nozzle 6 internally defining said conduit 4. The nozzle 6 is interchangeable, because it is removably associated to the body 3. In particular, said nozzle 6 is associated with the body 3 (e.g. by screwing in an opening defined by the body 3) so that it is operatively in contact with the shutter element 5, when the latter is in the closed position.

The nozzle 6 is preferably made of metallic material, to allow precision mechanical machining.

It should be noted that the shutter element 5 can be constituted, for example, by a piston driven by a coil 7 and which may act a spring 8 (according to the prior art). It should be noted that, originally, the shutter element 5 is made of metal, particularly in the portion in contact with the nozzle 6.

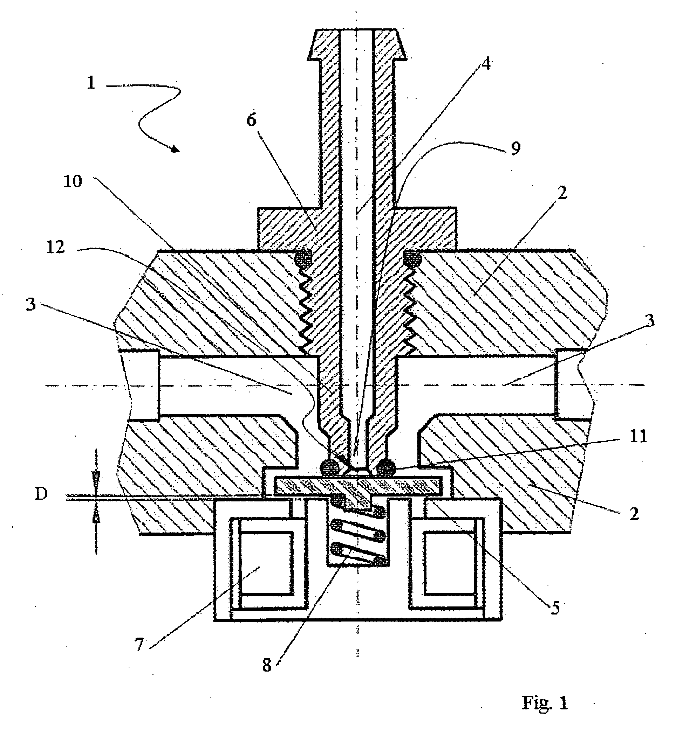

In the embodiment shown in figure 1, the nozzle 6, originally, is so shaped that the conduit 4 has a narrowing 9 substantially at said inlet.

It should be noted that the nozzle 6, originally, is so shaped as to have a portion 10 having development in a longitudinal axis internally to said chamber 3, the shutter element 5 being movable along said longitudinal axis. Thanks to this constructive particularity, said portion 10 of the nozzle 6 is operatively active on the shutter element 5 to limit its stroke (during the closure of the shutter element 5 itself).

The fact that the nozzle 6 is interchangeable enables to adapt the injector 1 to systems of different sizes.

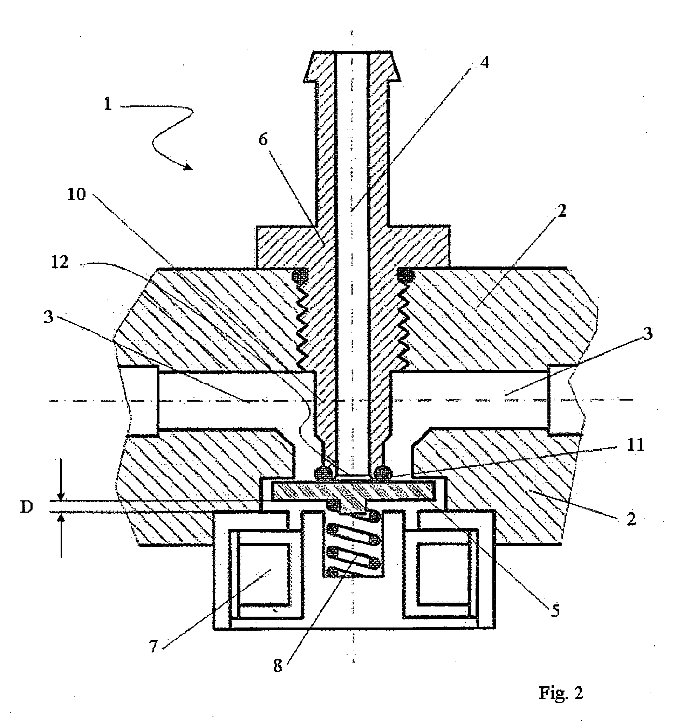

For example, the nozzle 6 (shown in figure 1) is interchangeable with another nozzle 6 (shown in figure 2) having said portion 10 internal to the chamber 3 with smaller longitudinal dimension, so that a stroke D of the shutter element 5 is proportionately greater.

Moreover, the injector 1 originally comprises a sealing member 11 associated to the nozzle 6 and co-operating with the shutter element 5 to occlude the inlet of the conduit 4. In the preferred embodiment illustrated herein, said sealing member 11 is ring-shaped (e.g., it is a lateral O-Ring).

It should also be noted that the nozzle 6 is so shaped that the conduit 4 has a splay 12 at the inlet, to facilitate a fuel passage from the chamber 3 to the inlet of the conduit 4 itself.

Therefore, the injector 1 made available by the present invention allows a series of advantages, which shall be described in detail below.

A first advantage is that, with the injector 1, the presence of a connecting chamber between the chamber 3 and an interchangeable conduit portion is avoided.

This enables to eliminate the aforesaid problems of precision on the fuel injection; the conduit 4 has no choke in intermediate position between the inlet and the outlet. Only said splay 12 may remain to favour the passage of the gas from the chamber 3 to the conduit 4.

Moreover, the stroke of the piston (i.e. of the shutter element 5) is determined according to the conformation of the interchangeable nozzle 6, and in particular the longitudinal extension of the portion 10 of the nozzle 6. The piston goes to abut against the nozzle which will be longer if less gas is to be allowed to pass (in order to reduce the stroke of the piston, and consequently the gas passage section).

On the contrary, if fuel demand is greater (as is the case in large engines), the length of the interchangeable nozzle 6 will be smaller, allowing a greater travel for the piston, which will thus allow a greater inflow of fuel because the gas passage section is increased.

Moreover, the fact that the sealing member 11 (made of rubbery material) is associated to the interchangeable nozzle 6, in the form of lateral O-ring, entails numerous advantages.

First of all, there is no need for a calibrating mechanism, to compensate for the difference in stroke of the piston caused by temperature variations, because said lateral O-Ring has such shape and dimensions as to minimise volume variations. The O-Ring is relatively small and hence it suffers less from the swelling effect with temperature, and it is in a lateral position, and this also contributes to make the swelling effect negligible.

Moreover, the sealing member 11 is easily replaceable for maintenance purposes, being associated with the interchangeable nozzle 6.

Moreover, in the injector 1 the stroke of the piston does not suffer from uncertainties linked to the swelling of the rubber, but the only tolerances present are those linked to the mechanical machining of the metal whereof the nozzle 6 and the piston are made, but these tolerances are negligible relative to the stroke D of the piston.

The stroke of the piston can thus be maintained very short, because machining tolerances do not significantly influence the quantity of gas that flows from the chamber 3 to the conduit 4 when the piston is in the open position.

Moreover, the low tolerances achievable thanks to the idea of the present invention enable to regulate the stroke of the piston according to the demands imposed by the engine of the vehicle without requiring additional calibration mechanisms.

It should also be noted that the injector 6 according to the present invention is particularly fast, relative to known ones, particularly in the case of small quantities of fuel (i.e., small engine displacements), because the stroke to be travelled by the piston is limited by the interchangeable nozzle 6 and the fuel passage section is restricted.

The combination of the technical characteristics constituted by the absence of chokes in the conduit 4 (in intermediate position between the inlet and the outlet) and by the presence of the sealing member 11 associated to the interchangeable nozzle 6 thus enables to obtain a type of injectors 1 applicable to any engine displacement, simply replacing the interchangeable nozzle 6, always operating in conditions that are optimised according to engine displacement.

Summarising, the fundamental principle or the present invention is to avoid the presence of the connecting chamber, or to reduce it possibly to a splay 12 obtained on the inlet of the conduit 4, in contact with the chamber 3. This technical characteristic enables to eliminate, or at least drastically to reduce the error of additional fuel injection which occurs even when the piston is already closed. Moreover, in the present invention the sealing member 11 is applied to the nozzle 6, this enabling to make the shutter element 5 of metal, with great advantage in terms of tolerances. In particular, said technical characteristic enables to rely on the typical tolerances of metal component work processes, which are far better than those achievable in systems containing components made of rubber or other easily deformable materials. This enables to design the nozzle 6 interchangeable, so that its length limits with precision the stroke of the piston to the value needed for the particular engine displacement on which the injector will be installed. This is particularly advantageous in cases requiring greater precision, i.e. for small engine displacements, because it enables to reduce the piston stroke, thereby favouring the response speed of the injector.

In addition, the dimension of the inlet section of the conduit 4, through which the fuel flows from the chamber 3 to the conduit 4, is optimised as well, i.e. it is reduced to the dimensions required according to the fuel demand of the specific engine (displacement) on which the injector is installed.

Since said passage section is reduced, the force resisting to the opening of the injector (given by the product of a pressure difference between the chamber 3 and the conduit 4, multiplied times said passage section) will consequently be reduced, increasing the system's response speed.

Therefore, the injector 1 made available by the present invention enables to obtain better performance, especially if it has to be installed on small displacement systems, without thereby worsening performance in large displacement systems, where the behaviour of the injector is in fact similar to that of prior art injectors.

Lastly, consider that the injector 1 made available by the present invention does not require calibration mechanisms after installation, which may require a great additional time expenditure for the installer, and in any case do not assure reliable and durable results.

## Claims

1. Fuel injector (1), comprising:
- a valve body (2) provided with a chamber (3) able to receive the pressurised fuel;
- a conduit (4) for evacuating the fuel from the injector, having an inlet positioned internally to said chamber (3);
- a shutter element (5) operatively connected to the valve body (2), movable between a closed position in which it is active on the inlet of the conduit (4) to occlude a passage of fuel from the chamber (3) to the conduit (4), and an open position in which it is not active on the inlet of the conduit (4), to allow a passage of fuel from the chamber (3) to the conduit (4),
**characterised in that** it comprises an interchangeable nozzle (6), removably associated with the body (2) and internally defining said conduit (4), said nozzle (6) being operatively in contact with the shutter element (5), when said element (5) is in the closed position;
said nozzle (6) being so shaped that the conduit (4) has a narrowing (9) substantially at said inlet;
the fuel injector further comprising a sealing member (11) applied to the nozzle (6) and co-operating with the shutter element (5) to occlude the inlet of the conduit (4).

2. Injector as claimed in claim 1, wherein the nozzle (6) is so shaped as to have a portion (10) having development in a longitudinal axis internally to said chamber (3), the shutter element (5) being movable along said longitudinal axis.

3. Injector as claimed in claim 2, wherein said portion (10) of the nozzle (6) is operatively active on the shutter element (5) to limit its stroke.

4. Injector as claimed in claim 3, wherein nozzle (6) is interchangeable with another nozzle (6) having said portion (10) internal to the chamber (3) with smaller or greater longitudinal dimension, so that a stroke of the shutter element (5) is proportionately greater or smaller, respectively.

5. Injector as claimed in claim 4, wherein said sealing element (11) is ring shaped.

6. Injector as claimed in claim 1, wherein the nozzle (6) is so shaped that the conduit (4) has a splay (12) at the inlet, to facilitate a fuel passage from the chamber (6) to the inlet of the conduit (4) itself.

7. Injector as claimed in claim 1, wherein said fuel is gaseous.

8. Injector as claimed in claim 1, wherein the nozzle (6) is made of metallic material.

9. Injector as claimed in claim 1, wherein the shutter element (5) is made of metallic material.

## Patentansprüche

1. Kraftstoffeinspritzventil (1), umfassend:
- einen Ventilkörper (2), versehen mit einer Kammer (3), in der Lage, mit Druck beaufschlagten Kraftstoff aufzunehmen;
- eine Leitung (4) zum Ableiten des Kraftstoffs aus dem Einspritzventil, aufweisend einen Einlass, positioniert in der Kammer (3);
- ein Verschlusselement (5), betriebswirksam verbunden mit dem Ventilkörper (2), beweglich zwischen einer geschlossenen Stellung, in der es auf dem Einlass der Leitung (4) aktiv ist, um eine Kraftstoffströmung von der Kammer (3) zur Leitung (4) zu verschließen, und einer offenen Stellung, in der es nicht auf dem Einlass der Leitung (4) aktiv ist, um eine Kraftstoffströmung von der Kammer (3) zur Leitung (4) zu ermöglichen,
**dadurch gekennzeichnet, dass** er eine austauschbare Düse (6) umfasst, die abnehmbar mit dem Körper (2) verbunden ist und die Leitung (4) intern definiert, wobei die Düse (6) betriebswirksam in Kontakt mit dem Verschlusselement (5) in der geschlossenen Stellung ist;
wobei die Düse (6) so ausgestaltet ist, dass die Leitung (4) eine Verengung (9) im Wesentlichen am Einlass aufweist;
wobei das Kraftstoffeinspritzventil zudem ein Dichtelement (11) umfasst, angebracht an der Düse (6) und zusammenwirkend mit dem Verschlusselement (5), um den Einlass der Leitung (4) zu verschließen.

2. Einspritzventil nach Anspruch 1, wobei die Düse (6) so ausgestaltet ist, dass sie einen Abschnitt (10), aufweisend eine Entwicklung in einer Längsachse in der Kammer (3), besitzt, wobei das Verschlusselement (5) entlang der Längsachse bewegbar ist.

3. Einspritzventil nach Anspruch 2, wobei der Abschnitt (10) der Düse (6) betriebswirksam auf dem Verschlusselement (5) aktiv ist, um dessen Hub zu begrenzen.

4. Einspritzventil nach Anspruch 3, wobei die Düse (6) durch eine andere Düse (6) ausgetauscht werden kann, die den Abschnitt (10) in der Kammer (3) mit einer kleineren oder größeren Längsabmessung aufweist, sodass ein Hub des Verschlusselements (5) proportional jeweils größer oder kleiner ist.

5. Einspritzventil nach Anspruch 4, wobei das Dichtelement (11) ringförmig ist.

6. Einspritzventil nach Anspruch 1, wobei die Düse (6) so ausgestaltet ist, dass die Leitung (4) eine Abkantung (12) am Einlass aufweist, um das Strömen des Kraftstoffs von der Kammer (6) zum Einlass der Leitung (4) zu erleichtern.

7. Einspritzventil nach Anspruch 1, wobei der Kraftstoff gasförmig ist.

8. Einspritzventil nach Anspruch 1, wobei die Düse (6) aus Metallmaterial gefertigt ist.

9. Einspritzventil nach Anspruch 1, wobei das Verschlusselement (5) aus Metallmaterial gefertigt ist.

## Revendications

1. Injecteur de combustible (1) comprenant :
- un corps de vanne (2) équipé d'une chambre (3) en mesure de recevoir le combustible sous pression ;
- un conduit (4) pour l'évacuation du combustible de l'injecteur, ayant une entrée positionnée à l'intérieur de ladite chambre (3) ;
- un élément d'obturation (5) relié de façon opérationnelle au corps de vanne (2), mobile entre une position fermée dans laquelle il est actif sur l'entrée du conduit (4) pour fermer un passage de combustible de la chambre (3) au conduit (4), et une position ouverte dans laquelle il n'est pas actif sur l'entrée du conduit (4), pour permettre un passage de combustible de la chambre (3) au conduit (4),
**caractérisé en ce qu'**il comprend une buse interchangeable (6), associée de façon amovible au corps (2) et définissant à l'intérieur ledit conduit (4), ladite buse (6) étant opérationnellement au contact de l'élément d'obturation (5), lorsque ledit élément (5) est dans la position fermée ;
ladite buse (6) étant formée de manière à ce que le conduit (4) présente un rétrécissement (9) substantiellement au niveau de ladite entrée ;
l'injecteur de combustible comprend également un élément d'étanchéité (11) appliqué à la buse (6) et coopérant avec l'élément d'obturation (5) pour fermer l'entrée du conduit (4).

2. Injecteur selon la revendication 1, où la buse (6) est formée de manière à présenter une portion (10) se développant en un axe longitudinal à l'intérieur de ladite chambre (3), l'élément d'obturation (5) étant mobile le long dudit axe longitudinal.

3. Injecteur selon la revendication 2, où ladite portion (10) de la buse (6) est opérationnellement active sur l'élément d'obturation (5) pour limiter sa course.

4. Injecteur selon la revendication 3, où la buse (6) est interchangeable avec une autre buse (6) dont dispose ladite portion (10) à l'intérieur de la chambre (3) avec une dimension longitudinale plus petite ou plus grande, de manière à ce qu'une course de l'élément d'obturation (5) est proportionnellement plus grand ou plus petit, respectivement.

5. Injecteur selon la revendication 4, où ledit élément d'étanchéité (11) a la forme d'un anneau.

6. Injecteur selon la revendication 1, où la buse (6) formée de manière à ce que le conduit (4) présente une déformation (12) au niveau de l'entrée, pour faciliter un passage du combustible de la chambre (6) à l'entrée du conduit (4).

7. Injecteur selon la revendication 1, où ledit combustible est gazeux.

8. Injecteur selon la revendication I, où la buse (6) est réalisée dans un matériau métallique.

9. Injecteur selon la revendication I, où l'élément d'obturation (5) est réalisée dans un matériau métallique.
